# EUROPEAN PATENT APPLICATION

(11) **EP 2 495 892 A1**
(43) Date of publication of application: **05.09.2012**
(21) Application number: 10832635.6
(22) Date of filing: 22.11.2010
(51) Int. Cl.: H04B 10/12, H04L 27/26, H04J 14/02

(54) **METHOD, DEVICE AND SYSTEM FOR SIGNAL PROCESSING IN PASSIVE OPTICAL NETWORK**

(30) Priority: 24.11.2009 CN 200910226175
(71) Applicant: Huawei Technologies Co., Ltd., Shenzhen, Guangdong 518129 (CN)
(72) Inventor: ZOU, Shimin, Shenzhen Guangdong 518129 (CN)
(74) Representative: Körber, Martin Hans
(86) International application number: PCT/CN2010/078942
(87) International publication number: WO 2011/063728

(57) **Abstract**

A signal processing method, device, and system in a passive optical network are provided. The signal processing method in the passive optical network includes: performing baseband encoding processing on a received service signal; modulating the service signal after baseband encoding processing onto allocated Orthogonal Frequency Division Multiple Access subcarriers through an Orthogonal Frequency Division Multiplexing modulation manner; performing digital/analog conversion on the modulated OFDMA subcarriers to obtain an electric domain Orthogonal Frequency Division Multiple Access signal; modulating the electric domain Orthogonal Frequency Division Multiple Access signal to an uplink optical signal to obtain an optical domain Orthogonal Frequency Division Multiple Access signal; and transmitting the optical domain Orthogonal Frequency Division Multiple Access signal.

## Description

This application claims priority to Chinese Patent Application No. 200910226175.3, filed with the Chinese Patent Office on November 24, 2009 and entitled "SIGNAL PROCESSING METHOD, DEVICE, AND SYSTEM IN A PASSIVE OPTICAL NETWORK", which is incorporated herein by reference in its entirety.

### FIELD OF THE INVENTION

The present invention relates to the field of communications technologies, and in particular, to a signaling processing method, device, and system in a passive optical network.

### BACKGROUND OF THE INVENTION

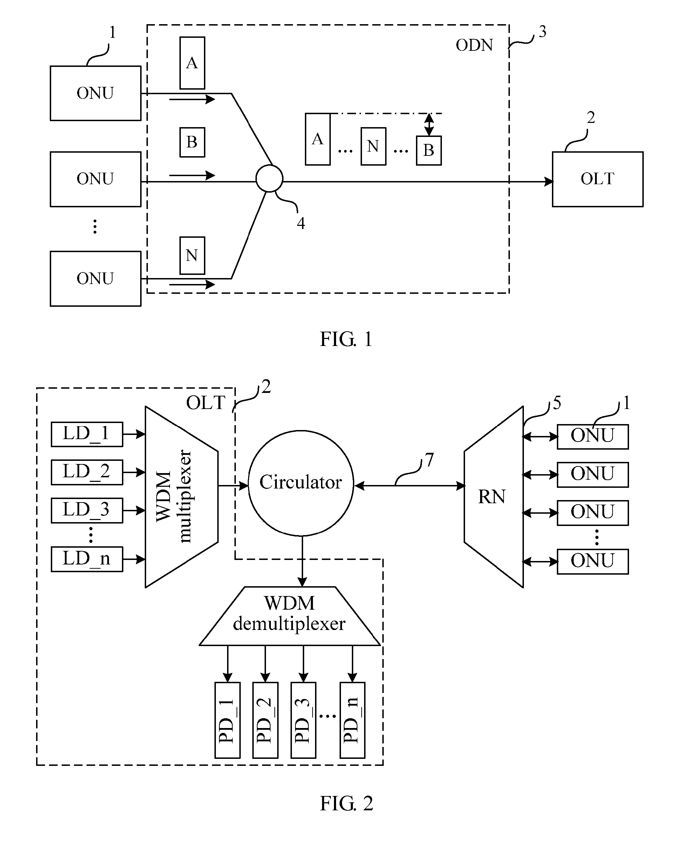

A passive optical network (Passive Optical Network, PON) is a broadband optical access technology and has a point-to-multipoint physical topology structure. FIG. 1 is a schematic structure diagram of a PON network in a prior art. As shown in FIG. 1, the PON network includes an optical line terminal (Optical Line Terminal, OLT), an optical distribution network (Optical Distribution Network, ODN), and multiple optical network units (Optical Network Units, ONUs). The multiple ONUs 1 share fiber resources and ports of an OLT2. The ODN3 connects one OLT2 and one or more ONUs 1 in a passive mode. An optical branching point 4 in the ODN2 needs no active node device and may be implemented by just one passive optical branching device 4. Therefore, the PON has such advantages as the sharing of fiber resources, sharing of OLT ports, saving of investments in equipment rooms, high device security, fast network construction, and low construction cost. With the increase of broadband services, the PON technology continues to evolve, from an asynchronous transfer mode (Asynchronous Transfer Mode, ATM) PON (ATM Passive Optical Network, APON) and broadband passive optical network (Broadband Passive Optical Network, BPON) to Ethernet passive optical network (Ethernet Passive Optical Network, EPON), Gigabit-Capable passive optical network (Gigabit-Capable PON , GPON), and Wavelength Division Multiplexing (Wavelength Division Multiplexing, WDM) PON. The general trend of PON evolution is to achieve a larger access bandwidth, a longer transmission distance, and more users served by each OLT.

When planning a network, an operator needs to consider factors such as a transmission distance, power consumption, and a split ratio. For example, the transmission distance of the PON is above 100 km, which is far longer than 20 km; therefore, the coverage area of the PON may be enlarged, which allows centralized deployment of OLTs, reduces the construction of central offices (Central Offices, COs), and cuts down on the operation and maintenance cost of the whole access network. The all-optical technology may be used to implement the long-distance transmission of the PON for the transparency of the all-optical technology is desirable and has lower power consumption than that of the optical-electrical-optical (Optical-Electrical-Optical, OEO) technology. The higher split ratio of the PON, the better; and the more users served, the better. The current split ratio of the GPON is 1:32 or 1:64 and the operators expect that the split ratio of the PON can be increased to 1:256-1:1024. For example, Deutsch Telekom (DT) hopes to use a WDM-PON to achieve passive transmission over a distance of above 50 km, which can serve more than 1,000 users, and provide up to 1 Gbps access bandwidth for each user. However, the current WDM PON does not meet such technical requirements.

FIG. 2 is a network architecture diagram of a WDM PON in the prior art. As shown in FIG. 2, the WDM PON network may include multiple ONUs, one remote node (Remote Node, RN), and one OLT2. The remote node includes a passive WDM demultiplexer and a WDM multiplexer. The OLT2 also includes a WDM demultiplexer and a WDM multiplexer. The operating principle of the WDM PON is as follows. The OLT2 has a light source that generates light of different wavelengths. For example, a broadband light source generates light via a filter or an independent color light source generates light. In the downlink, the OLT2 modulates service signals to optical signals of different wavelengths and sends the signal to the downlink through the WDM multiplexer in OLT2. The WDM demultiplexer in the RN5 demultiplexes optical signals of different wavelengths from the received signal and sends the optical signals to different ONUs 1, and then The ONUs 1 restore the service signals through photoelectric conversion. In the uplink, each ONU1 modulates the service signals onto optical signals of different wavelengths, multiplexes the optical signals into a single fiber 7, and sends the signal to the OLT through the WDM multiplexer in the RN5. Then, the OLT2 demultiplexes each wavelength through the WDM demultiplexer, which are converted to electrical signals through optical receivers (PD_1 to PD_n) to restore the service signals. The merit of the WDM PON is the continuity of optical signals and therefore no burst receiver is required in the OLT or the ONU. In addition, because each ONU occupies one wavelength exclusively, the WDM PON provides good confidentiality and is suitable for private line applications of key accounts.

During the implementation of the present invention, the inventor finds at least the following problems in the WDM PON technology:

The quantity of wavelengths demultiplexed by the WDM PON is limited. For example, 40 wavelengths available exist at the C band of the WDM PON and it is hard to increase the quantity. If each user is allocated an independent wavelength, the quantity of served users is limited. Since each ONU in the WDM PON uses one wavelength exclusively, the sharing of the wavelength is undesirable. The wavelength of one ONU cannot be used by another ONU even if the wavelength is not in use, which is a waste of wavelength resources.

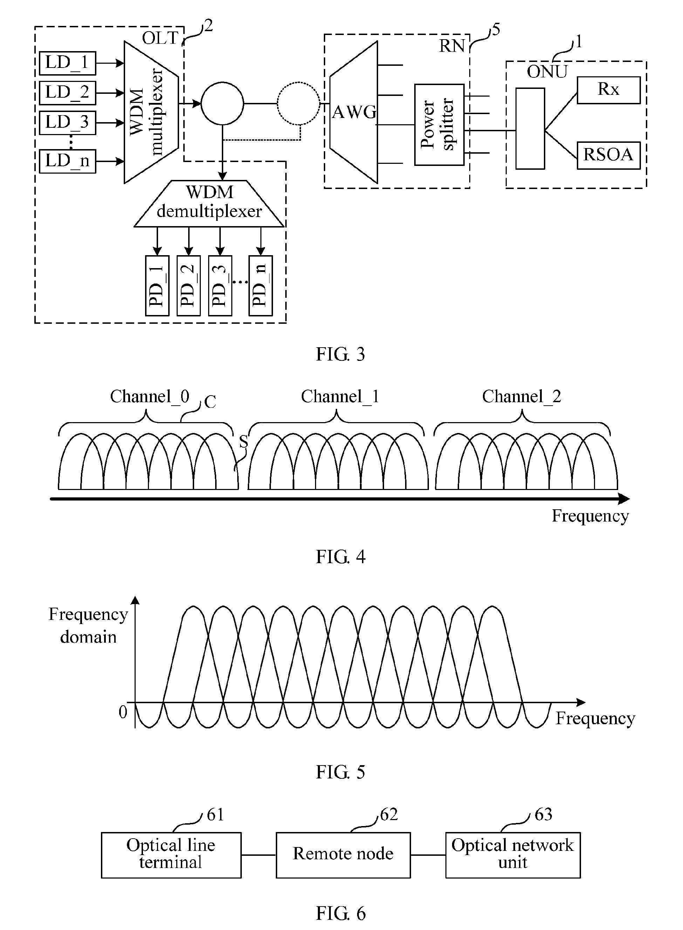

FIG. 3 is an architecture diagram of a PON with a mixture of WDM and TDM in the prior art. As shown in FIG. 3, a Time Division Multiple Access (Time Division Multiple Access, TDMA) function is added in the WDM PON. In the downlink, multiple GPON downlink signals are modulated to color wavelengths via transmitters (LD_1 to LD_n) of the OLT2. The signals are multiplexed into one signal by the WDM multiplexer and sent to the downlink remote node RN5. The RN5 is a passive node and includes a power splitter (POWER SPLITER) in addition to a WDM demultiplexer and a WDM multiplexer. The WDM demultiplexer in the RN5 performs wavelength demultiplex on the received optical signals to obtain optical signals of single wavelength. The power splitter splits the power of the optical signals of single wavelength and sends the obtained signals to all ONUs 1 connected to the power splitter. Each ONU1 may include a Reflective Semiconductor Optical Amplifier (Reflective Semiconductor Optical Amplifier, RSOA). A seed light source of the ONU1 may be a color light source transmitted from a transmitter of the OLT2. In the uplink, the RSOA may re-modulate the ONU1, and then the signal is superposed by the power splitter and the WDM multiplexer, such as an Arrayed Waveguide Grating (Arrayed Waveguide Grating, AWG), and sent to the receivers (PD_1 to PD_n) of the OLT. The PON with the mixture of WDM and TDM may improve the split ratio of a passive splitter so that more users can be served. The split ratio of the PON with the mixture of WDM and TDM is 1:(M*N), where M is the quantity of channels of the demultiplexer and N is a power allocation ratio of the power splitter. For example, when M = N = 32, up to 1,024 ONUs may be connected, which increases the wavelength sharing efficiency and achieves that each wavelength may be shared among a group of ONUs (for example, 32 ONUs share one wavelength).

During the implementation of the present invention, the inventor finds at least the following problems in the WDM and TDM mixed PON technology:

The PON with the mixture of WDM and TDM is in a TDMA+WDMA mode in the uplink, and the performance thereof depends on the inherent performance of TDMA, such as limitation in a logical distance and a physical distance. The transmission distance of the PON with the mixture of WDM and TDM totally depends on the physical transmission distance of TDM PON. Due to a burst frame structure of the uplink TDMA, it is hard to implement optical power compensation in the uplink whether it is implemented by an Erbium-doped Optical Fiber Amplifier (Erbium-doped Optical Fiber Amplifier, EDFA) or a Semiconductor Optical Amplifier (Semiconductor Optical Amplifier, SOA). Therefore, the PON with the mixture of WDM and TDM cannot implement long-distance transmission. In addition, since the TDMA mode is used for each single wavelength, in the uplink, a receiving end of the OLT needs a burst transmitter and the ONU also needs a burst transmitter. The cost of network construction is high.

### SUMMARY OF THE INVENTION

Embodiments of the present invention provide a signal processing method, device, and system in a passive optical network to increase the transmission distance and reduce the cost of network construction.

An embodiment of the present invention provides a signal processing method in a passive optical network, which includes:
performing baseband encoding processing on a received service signal;
modulating the service signal after the baseband encoding processing onto an allocated Orthogonal Frequency Division Multiple Access subcarriers through an Orthogonal Frequency Division Multiplexing modulation manner;
performing digital/analog conversion on the modulated Orthogonal Frequency Division Multiple Access subcarriers to obtain an electric domain Orthogonal Frequency Division Multiple Access signal;
modulating the electric domain Orthogonal Frequency Division Multiple Access signal onto an uplink optical signal to obtain an optical domain Orthogonal Frequency Division Multiple Access signal; and
transmitting the optical domain Orthogonal Frequency Division Multiple Access signal.
An embodiment of the present invention further provides a signal processing method in a passive optical network, which includes:
performing analog/digital conversion on received superposed optical domain Orthogonal Frequency Division Multiple Access signals;
performing Orthogonal Frequency Division Multiplexing demodulation on the signals after the analog/digital conversion; and
performing baseband decoding processing on the signals after the Orthogonal Frequency Division Multiplexing demodulation to obtain service signals.

An embodiment of the present invention provides an optical network unit, which includes:
an encoding module, configured to perform baseband encoding processing on a received service signal;
an Orthogonal Frequency Division Multiplexing modulation module, configured to modulate the signal after the baseband encoding processing onto allocated Orthogonal Frequency Division Multiple Access subcarriers through an Orthogonal Frequency Division Multiplexing modulation manner;
a digital/analog conversion module, configured to perform digital/analog conversion on the modulated Orthogonal Frequency Division Multiple Access subcarriers to obtain an electric domain Orthogonal Frequency Division Multiple Access signal;
an optical modulation module, configured to modulate the electric domain Orthogonal Frequency Division Multiple Access signal to an uplink optical signal to obtain an optical domain Orthogonal Frequency Division Multiple Access signal; and
a transmission module, configured to transmit the optical domain Orthogonal Frequency Division Multiple Access signal.

An embodiment of the present invention provides an Optical Line Terminal, which includes:
an analog/digital conversion module, configured to perform analog/digital conversion on received superposed Orthogonal Frequency Division Multiple Access signals;
an Orthogonal Frequency Division Multiplexing demodulation module, configured to perform Orthogonal Frequency Division Multiplexing demodulation on the signals after analog/digital conversion; and
a baseband decoding module, configured to perform baseband decoding processing on the signals after the Orthogonal Frequency Division Multiplexing demodulation to obtain service signals.

An embodiment of the present invention provides a passive optical network system, which includes an Optical Line Terminal, a remote node, and more than one optical network unit, where:
the optical network unit is configured to perform baseband encoding processing on a received service signal; modulate the signal after baseband encoding processing to allocated Orthogonal Frequency Division Multiple Access subcarriers through an Orthogonal Frequency Division Multiple Access modulation manner; perform digital/analog conversion on the modulated Orthogonal Frequency Division Multiple Access subcarriers to obtain an electric domain Orthogonal Frequency Division Multiple Access signal; modulate the electric domain Orthogonal Frequency Division Multiple Access signal to an uplink optical signal to obtain an optical domain Orthogonal Frequency Division Multiple Access signal; and transmit the optical domain Orthogonal Frequency Division Multiple Access signal;
the RN is configured to superpose optical domain Orthogonal Frequency Division Multiple Access signals of the same wavelength transmitted by the optical network units through a power splitter, multiplex the superposed optical domain Orthogonal Frequency Division Multiple Access signals into a multi-wavelength optical signal through a Wavelength Division Multiplexing multiplexer, and transmit the multi-wavelength optical signal to the optical line terminal; and
the optical line terminal is configured to: demultiplex the received multi-wavelength optical signal to obtain optical signals of different wavelengths which bear the superposed optical domain Orthogonal Frequency Division Multiple Access signals, and perform analog/digital conversion, Orthogonal Frequency Division Multiplexing demodulation, and baseband decoding processing on the superposed optical domain Orthogonal Frequency Division Multiple Access signals respectively to obtain service signals.

Through the signal processing method, device and system of the passive optical network provided by the embodiments of the present invention, the received service signal is modulated onto allocated Orthogonal Frequency Division Multiple Access subcarriers, and digital/analog conversion is performed on the modulated Orthogonal Frequency Division Multiple Access subcarriers to obtain an electric domain Orthogonal Frequency Division Multiple Access signal; then the electric domain Orthogonal Frequency Division Multiple Access signal is modulated onto the uplink optical signal; afterwards, optical signals are superposed and multiplexed through the remote node to obtain a continuous multi-wavelength optical signal. As the optical power compensation for continuous signals is easy, long-distance transmission can be supported. Moreover, because the cost of transmitters and receivers of the continuous signal is lower than that of the burst signal, the cost of network construction is reduced.

### BRIEF DESCRIPTION OF THE DRAWINGS

FIG. 1 is a schematic structure diagram of a PON network in the prior art;

FIG. 2 is a network architecture diagram of a WDM PON in the prior art;

FIG. 3 is a network architecture diagram of a PON with a mixture of WDM and TDM in the prior art;

FIG. 4 is a schematic diagram of a frequency domain of an OFDM system according to an embodiment of the present invention;

FIG. 5 is a schematic diagram of another frequency domain of an OFDM system according to an embodiment of the present invention;

FIG. 6 is a schematic structure diagram of an embodiment of a passive optical network system according to the present invention;

FIG. 7a is a schematic structure diagram of one application in an embodiment of a passive optical network system according to the present invention;

FIG. 7b is a schematic structure diagram of another application in an embodiment of a passive optical network system according to the present invention;

FIG. 8 is a schematic structure diagram of an embodiment of an optical network unit according to the present invention;

FIG. 9 is a schematic structure diagram of an embodiment of an optical line terminal according to the present invention;

FIG. 10 is a flowchart of a first embodiment of a signal processing method in a passive optical network according to the present invention;

FIG. 11 is a flowchart of a second embodiment of a signal processing method in a passive optical network according to the present invention;

FIG. 12a is a flowchart of a third embodiment of a signal processing method in a passive optical network according to the present invention; and

FIG. 12b is a schematic diagram of OFDMA subcarriers superposed on the same wavelength in a third embodiment of a signal processing method in a passive optical network according to the present invention.

### DETAILED DESCRIPTION OF THE EMBODIMENTS

The technical solution of the present invention is hereinafter described in detail with reference to the accompanying drawings and exemplary embodiments.

Orthogonal Frequency Division Multiplexing (Orthogonal Frequency Division Multiplexing, OFDA) technology is a part of Frequency Division Multiplexing (Frequency Division Multiplexing, FDM) technology. The FDM technology is a technology in which multiple subcarriers are used between adjacent frequencies in a single channel. In an OFDM system, to maximize the spectrum efficiency, the subcarriers may overlap. Generally, overlapped adjacent channels may interfere with each other, but in the OFDM system, subcarriers are precisely orthogonal so that the subcarriers do not interfere with each other even though they overlap. Therefore, the OFDM system can maximize the spectrum efficiency without causing interference between adjacent channels.

FIG. 4 is a schematic diagram of a frequency domain in an OFDM system according to an embodiment of the present invention. As shown in FIG. 4, each independent channel C may include seven subcarriers S. A transmission rate of the channel grows with the increase of the channel bandwidth. Compared with a common FDM system, the OFDM system allows higher data throughput. The overlapping of the subcarriers in an OFDM communication system enables more efficient use of the spectrum resources. Since a maximum power value point of each subcarrier directly corresponds to a minimum power value point of the adjacent channels, the subcarriers may partially overlap without interference from each other. FIG. 5 is a schematic diagram of another frequency domain of an OFDM system according to an embodiment of the present invention. As shown in FIG. 5, each subcarrier of the OFDM system is indicated by different peak points, and the peak point of each subcarrier directly corresponds to a zero-crossing point of other channels. The current OFDM system adopts a digital signal processing technology, in which for the generation and reception of all subcarriers, a digital signal processing algorithm completes the Inverse Fast Fourier Transform (IFFT) or Fast Fourier Transform (FFT), thereby simplifying the system structure. To increase the spectrum utilization, the spectrums of the subcarriers overlap but are orthogonal in the entire symbol period of the spectrums, thereby ensuring that signals can be restored by the receiving end without distortion.

The OFDM modulation process is also an IFFT or an Inverse Discrete Fourier Transform (Inverse Discrete Fourier Transform, IDFT) process, and the OFDM demodulation process is also an FFT or a Discrete Fourier Transform (Discrete Fourier Transform, DFT) process.

FIG. 6 is a schematic structure diagram of an embodiment of a passive optical network system according to the present invention. As shown in FIG. 6, the passive optical network system includes an optical line terminal 61, a remote node 62, and more than one optical network unit 63.

The ONUs 63 are configured to perform baseband encoding processing on a received service signal; modulate the signal after baseband encoding processing onto allocated Orthogonal Frequency Division Multiple Access subcarriers through an Orthogonal Frequency Division Multiplexing modulation manner; perform digital/analog conversion on the modulated Orthogonal Frequency Division Multiple Access subcarriers to obtain an electric domain Orthogonal frequency division multiple access signal; modulate the electric domain orthogonal Frequency Division Multiple Access signal onto an uplink optical signal to obtain an optical domain Orthogonal Frequency Division Multiple Access signal; and transmit the optical domain Orthogonal Frequency Division Multiple Access signal.

The RN 62 is configured to superpose the optical domain Orthogonal Frequency Division Multiple Access signals of the same wavelength transmitted by different optical network units through a power splitter, multiplex the superposed optical domain Orthogonal Frequency Division Multiple Access signals into a multi-wavelength optical signal through a Wavelength Division Multiplexing multiplexer, and send the multi-wavelength optical signal to the optical line terminal 61.

The optical line terminal 61 is configured to: demultiplex the received multi-wavelength optical signal to obtain optical signals of different wavelengths which bear the superposed optical domain Orthogonal Frequency Division Multiple Access signals, and perform analog/digital conversion, Orthogonal Frequency Division Multiplexing demodulation, and baseband decoding processing on the superposed optical domain Orthogonal Frequency Division Multiple Access signals respectively to obtain service signals.

Further, the optical line terminal 61 is configured to: perform baseband encoding processing and Orthogonal Frequency Division Multiplexing modulation on the received service signals to modulate the service signals onto allocated Orthogonal Frequency Division Multiple Access subcarriers; perform digital/analog conversion on the modulated Orthogonal Frequency Division Multiple Access subcarriers to obtain an electric domain Orthogonal Frequency Division Multiple Access signal; modulate the electric domain Orthogonal Frequency Division Multiple Access signal onto a downlink optical signal to obtain an optical domain Orthogonal Frequency Division Multiple Access signal; and multiplex the optical domain Orthogonal Frequency Division Multiple Access signals of different wavelengths into a multi-wavelength optical signal and send the multi-wavelength optical signal to the remote node 62.

The remote node 62 is further configured to demultiplex the received multi-wavelength optical signal through a Wavelength Division Multiplexing multiplexer into optical signals of different wavelengths which bear the optical domain Orthogonal Frequency Division Multiple Access signals, and transmit the Orthogonal Frequency Division Multiple Access signals to the optical network units 63 through a power splitter.

The optical network units 63 are further configured to receive the optical domain Orthogonal Frequency Division Multiple Access signals transmitted by the remote node 62 and perform analog/digital conversion, Orthogonal Frequency Division Multiplexing demodulation, and baseband decoding on the optical domain Orthogonal Frequency Division Multiple Access signals respectively to obtain the service signals.

In the embodiment of the present invention, the uplink transmission of a signal is from optical network unit to optical line terminal and the downlink transmission of a signal is from optical line terminal to optical network units.

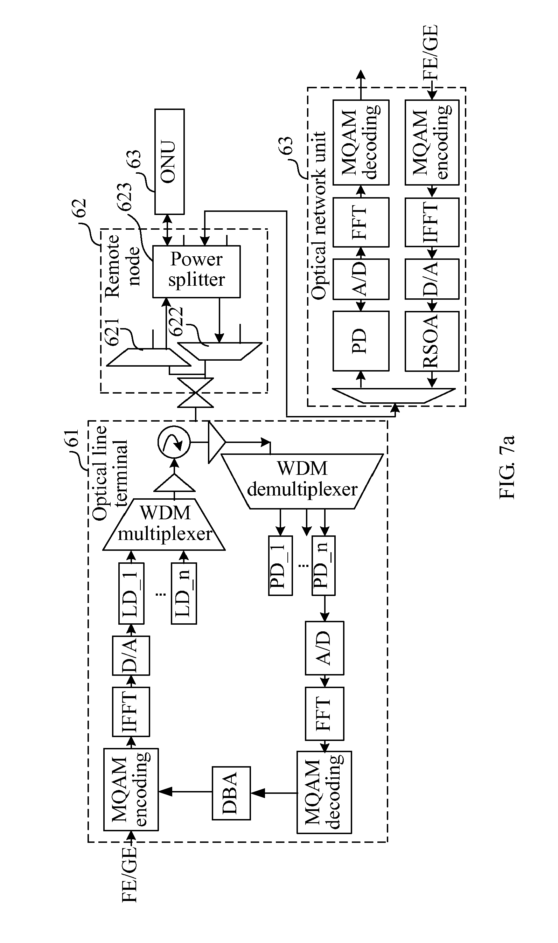

FIG. 7a is a schematic structure diagram of one application of in an embodiment of a passive optical network system according to the present invention. As shown in FIG. 7a, exemplarily, in the uplink of the passive optical network system, the optical network unit 63 performs Multiple Quadrature Amplitude Modulation (Multiple Quadrature Amplitude Modulation, MQAM) encoding (baseband encoding) and IFFT operation (that is, OFDM modulation) on the received service signal such as a Fast Ethernet (Fast Ethernet, FE) signal or a Gigabit Ethernet (Gigabit Ethernet, GE) signal to modulate the service signal onto allocated Orthogonal Frequency Division Multiple Access (Orthogonal Frequency Division Multiple Access, OFDMA) subcarriers; and then performs digital/analog (Digital/Analog, D/A) conversion on the Orthogonal Frequency Division Multiple Access subcarriers and modulates the Orthogonal Frequency Division Multiple Access subcarriers onto an optical signal through an Reflective Semiconductor Optical Amplifier (RSOA). The optical network unit 63 sends the OFDMA signal to the remote node 62, and superposes the OFDMA signals of multiple optical network units 63 to one OFDMA frame through a power splitter 623 in the RN 62. Then the Wavelength-Division Multiplexing multiplexer 622 in the remote node 62 may multiplex OFDMA frames of multiple power splitters into a multi-wavelength optical signal and send the multi-wavelength optical signal to the optical line terminal 61. After the optical line terminal 61 receives the multi-wavelength optical signal sent from the optical network units, the optical line terminal 61 demultiplexes the multi-wavelength optical signal into optical signals of different wavelengths through the WDM multiplexer and independently receives the optical signals of corresponding wavelengths through the receivers (PD_1 to PD_n); then the optical line terminal 61 performs A/D conversion, FFT operation (OFDM demodulation), and MQAM decoding (baseband decoding) processing on the optical signals of different wavelengths to obtain the service signals.

The uplink signal sent from the optical network unit ONU to the optical line terminal OLT is in the OFDMA format and the downlink signal sent from the OLT to the ONU may also be in the OFDMA format. As shown in FIG. 7a, in the downlink of the passive optical network, after receiving a service signal, the optical line terminal 61 performs MQAM encoding and OFDM modulation (through an IFFT operation) on the service signal to improve the dispersion tolerance and bandwidth efficiency, and modulates the service signal onto allocated OFDMA subcarriers, then performs D/A conversion on the electrical signals on the OFDMA subcarriers and modulates the signal to an optical signal. Transmitters (LD_1 to LD_n) send the optical signals to the WDM multiplexer and the WDM multiplexer multiplexes the optical signals of different wavelengths into a multi-wavelength optical signal. Then, the optical line terminal sends the multi-wavelength optical signal to the remote node 62. After the remote node receives the multi-wavelength optical signal from the optical line terminal, the Wavelength Division Multiplexing demultiplexer 621 of the remote node 62 demultiplexes the multi-wavelength optical signal into optical signals of different wavelengths; the power splitter 623 of the remote node 62 splits each OFDMA frame carried by optical signals of different wavelengths into optical domain OFDMA signals of the same wavelength; then the power splitter 623 may send the optical domain OFDMA signals of the same wavelength to the optical network units 63. After the receiver PD of an optical network unit 63 receives an optical domain OFDMA signal, the optical network unit 63 performs A/D conversion, FFT operation, and MQAM decoding on the OFDMA signal to obtain the service signal.

For example, when the downlink optical signals are 10Gbps GPON signals or EPON signals, the OLT first converts the bit rate to a character rate through MQAM encoding and IFFT operation. Assuming that M=16, the data rate of 10 Gbps is converted to a character rate of 2.5 GHz through 16QAM encoding. Therefore, 2.5GHz light modulators (LD_1 to LD_n) may be used to realize 10Gbps data rate, thereby reducing the requirement on the rate of the light modulators and overcoming the adverse dispersion impact under 10 Gbps. After receiving the optical signals, the receiver PD of each ONU converts the optical signals to 2.5GHz OFDM electrical signals, and then restores the downlink signals of the GPON or EPON format after the processes such as A/D conversion, FFT operation, and MQAM decoding, and finally restores the service signals, for example, data packets, sent to the ONU, and sends the service signals to the user equipment in the FE or GE format.

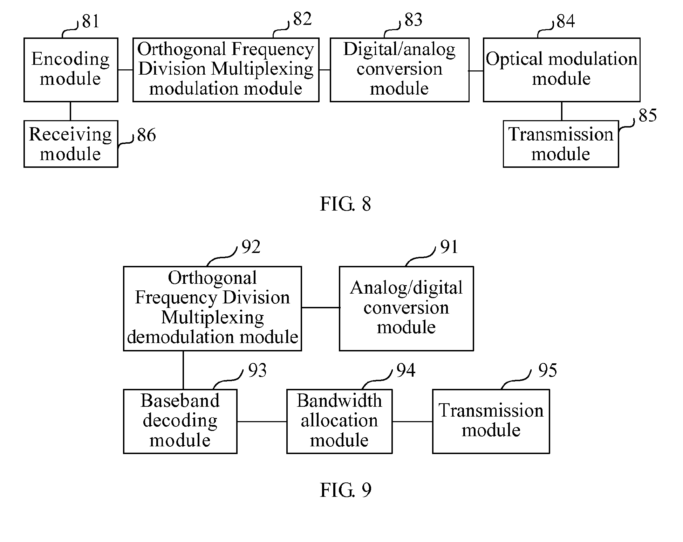

If the downlink optical signals are not in the GPON or EPON format, but in the FE or GE format, the OLT may first allocate downlink Orthogonal Frequency Division Multiple Access subcarriers for the OLT according to the traffic volume of the service signals. For example, the OLT allocates subcarriers in a downlink OFDMA frame to the ONU according to the traffic volume at the FE or GE port or Virtual Local Area Network (Virtual Local Area Network, VLAN) port. Then, as shown in FIG. 9a, the OLT encapsulates and adapts the FE/GE or VLAN signals and performs MQAM encoding, IFFT operation, and D/A conversion on the signals to modulate the signals to the allocated OFDMA subcarriers to create a complete downlink OFDMA frame. The downlink OFDMA frame is sent to the ONUs via the RN. The ONUs demodulate the frame based on the OFDMA subcarriers to restore the service signals in the FE or GE format.

Further, a Dynamic Bandwidth Allocation (Dynamic Bandwidth Allocation, DBA) module of the OLT may allocate downlink OFDMA subcarriers for the OLT according to the traffic volume and service type of the service signals. For example, when the OLT has a layer-3 monitoring capability, the DBA of the OLT in the downlink may allocate bandwidth according to the service type and the traffic volume and may define downlink OFDMA subcarriers with broadcast and multicast functions, and map a layer-3 multicast data stream to a corresponding multicast subcarrier. All authorized ONUs in one multicast group can receive and demodulate the service signals. The DBA allocates the OFDMA subcarriers for the ONU according to the service type, which ensures that high priority service uses the OFDMA subcarriers preferentially, and is more suitable for the transmission of real-time services such as videos. Therefore, when the ONU has the layer-3 monitoring capability, the ONU may generate a bandwidth allocation request according to the port traffic or according to the service type and the traffic volume. For example, in the case of a real-time service such as Voice over IP (VOICE OVER IP, VoIP) and a video call, the ONU may directly generate a high priority bandwidth allocation request to ensure the timely transfer of the real-time services.

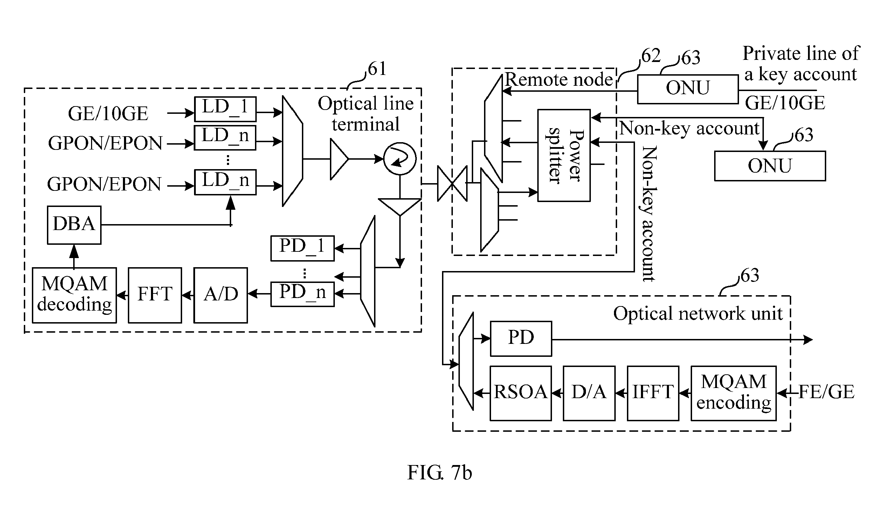

FIG. 7b is a schematic structure diagram of another application in an embodiment the passive optical network system according to the present invention. As shown in FIG. 7b, the OFDMA format is used in the uplink from an optical network unit 63 to the optical line terminal 61, but in the downlink from the optical line terminal 61 to the optical network unit 63, the GPON or EPON format may be used for the signal processing in the passive optical network.

For example, in the downlink, when a private line is provided for a key account, the optical line terminal OLT directly modulates a GE signal or 10GE signal to a color wavelength, that is, a multi-wavelength optical signal, and sends the multi-wavelength optical signal to the ONU. In this case, the ONU occupies the color wavelength exclusively to ensure security and confidentiality requirements for the private line of the key account. For an ordinary account, the OLT may modulate a signal to a color wavelength by using the downlink format of the current PON with a mixture of WDM and TDM. For example, the OLT directly modulates at least one downlink signal in GPON, GEPON or 10GEPON format to different color wavelengths through light modulators (LD_1 to LD_n).

Assuming that 32 different color wavelengths exist, the OLT multiplexes the 32 different color wavelengths into one signal through a Wavelength Division Multiplexing multiplexer such as an AWG and sends the signal to the downlink ONUs. When the optical signal reaches the RN, the WDM demultiplexer such as an AWG in the RN may restore the 32 wavelengths. The quantity of power splitters may be set according to the quantity of ordinary accounts. If all users are ordinary accounts, the remote node 62, that is, the RN, may set a corresponding power splitter for each wavelength. For private lines of key accounts, no power splitter is disposed or the signal directly reaches the ONU without passing through a power splitter and one key account may have one independent ONU.

The split ratio of a power splitter is generally 1:32 or 1:64. In the case of 1:32, when 32 wavelengths exist, 32*32=1024 ONUs can be connected. Assuming that the GPON downlink rate is 2.5 Gbps, the bandwidth is 32 (number of wavelengths)*2.5 Gbps, and each ONU may averagely obtain 32 (wavelengths)*2.5 Gbps/1024=77 Mbps downlink bandwidth. In the case of 10GPON or 10GEPON, each ONU may averagely obtain about 280M downlink bandwidth. In the case of 1:64, when 32 wavelengths exist, 32*64=2048 ONUs can be connected. Assuming that the GPON downlink rate is 10 Gbps, the average downlink bandwidth per ONU is 140 Mbps.

When the GPON or EPON format is used in the downlink, the advantage thereof is the transparency of private line services and the compatibility with the current GPON and EPON downlink formats so that logical design resources can be used rationally. In addition, the downlink capacity is scalable by wavelength. The addition of one wavelength does not adversely impact the functioning of other wavelengths. Because the downlink signal of a PON is continuous, optical power compensation is technically feasible. An EDFA may be used to compensate the optical power of the continuous signal to implement long-distance transmission.

In the embodiment of the present invention, a service signal is modulated through OFDM modulation. The uplink multi-wavelength optical signal sent by the ONU and the downlink signal sent by the OLT are continuous signals. Therefore, no uplink burst transmitter is required in the ONU and no uplink burst receiver is required in the OLT, which can reduce the cost of network construction. The optical power compensation for a continuous signal is easy to implement and therefore long-distance transmission can be implemented. The power splitters in the RN can meet the quantity requirements of the ONUs to be connected to the network. When an RSOA is used to generate the same uplink optical signal through reflection, the uplink optical signal of all ONUs in one group connected to one power splitter may be the same, which avoids generating beat noise in the signal received by the OLT in the uplink.

FIG. 8 is a schematic structure diagram of an embodiment of an optical network unit according to the present invention. As shown in FIG. 8, the optical network unit includes an encoding module 81, an Orthogonal Frequency Division Multiplexing modulation module 82, a digital/analog conversion module 83, an optical modulation module 84, and a transmission module 85.

The encoding module 81 is configured to perform baseband encoding processing on a received service signal.

The Orthogonal Frequency Division Multiplexing modulation module 82 is configured to modulate the signal after baseband encoding processing onto allocated Orthogonal Frequency Division Multiple Access subcarriers through an Orthogonal Frequency Division Multiplexing modulation manner.

The digital/analog conversion module 83 is configured to perform digital/analog conversion on the modulated Orthogonal Frequency Division Multiple Access subcarriers to obtain an electric domain Orthogonal Frequency Division Multiple Access signal.

The optical modulation module 84 is configured to modulate the electric domain Orthogonal Frequency Division Multiple Access signal to an uplink optical signal to obtain an optical domain Orthogonal Frequency Division Multiple Access signal.

The transmission module 85 is configured to transmit the optical domain Orthogonal Frequency Division Multiple Access signal.

Further, the optical modulation module 84 may be configured to generate an uplink optical signal according to the received downlink optical signal through reflection; and modulate the electric domain Orthogonal Frequency Division Multiple Access signal to the uplink optical signal to obtain an optical domain Orthogonal Frequency Division Multiple Access signal.

The optical network unit may further include:
a receiving module 86, configured to receive uplink bandwidth indication information which includes the quantity and serial numbers of the allocated Orthogonal Frequency Division Multiple Access subcarriers.

Specifically, in the uplink of the passive optical network, after the optical network unit receives a service signal such as an FE signal or a GE signal, the encoding module 81 may perform baseband encoding processing such as MQAM encoding on the service signal; then the Orthogonal Frequency Division Multiplexing modulation module 82 performs Orthogonal Frequency Division Multiplexing modulation such as IFFT operation on the service signal after baseband encoding processing, and the service signal after baseband encoding processing is modulated onto the allocated Orthogonal Frequency Division Multiple Access OFDMA subcarriers. The quantity and serial numbers of the allocated Orthogonal Frequency Division Multiple Access subcarriers may be obtained from the uplink bandwidth indication information received from the OLT. Then, after the Digital/analog conversion module 83 performs D/A conversion on the modulated OFDMA subcarriers, the optical modulation module 84 generates, via an RSOA, an uplink optical signal through reflection according to the downlink optical signal sent by the OLT and modulates the electrical signal on the OFDMA subcarriers onto an optical signal to obtain an optical domain OFDMA signal. The transmission module, a transmitter for example, of the optical network unit sends the optical domain OFDMA signal to the remote node. One power splitter of the remote node superposes the optical domain OFDMA signals of the same wavelength sent by multiple optical network units into one OFDMA frame. The WDM multiplexer of the remote node then multiplexes the optical domain OFDMA signals superposed by multiple power splitters, into one multi-wavelength optical signal and sends the multi-wavelength optical signal to the optical light terminal.

In the embodiment of the present invention, in the uplink, the encoding module of the optical network unit performs baseband encoding processing on the received service signal; the Orthogonal Frequency Division Multiplexing modulation module modulates the encoded service signal to the allocated OFDMA subcarriers; the Digital/analog conversion module performs D/A conversion on the modulated Orthogonal Frequency Division Multiple Access subcarriers; the optical modulation module modulates the converted Orthogonal Frequency Division Multiple Access subcarriers to an optical signal; and then the transmission module sends the optical signal to the RN. Then the RN superposes and multiplexes the optical signals sent by multiple optical network units to obtain a continuous multi-wavelength optical signal. Because the optical power compensation for a continuous multi-wavelength optical signal is easy, long-distance transmission can be supported. Moreover, the cost of transmitters and receivers of continuous signals is lower than that of burst signals, thereby reducing the cost of network construction.

FIG. 9 is a schematic structure diagram of an embodiment of an optical line terminal according to the present invention. As shown in FIG. 9, the optical line terminal includes an analog/digital conversion module 91, an Orthogonal Frequency Division Multiplexing demodulation module 92, and a baseband decoding module 93.

The analog/digital conversion module 91 is configured to perform analog/digital conversion on received superposed Orthogonal Frequency Division Multiple Access signals.

The Orthogonal Frequency Division Multiplexing demodulation module 92 is configured to perform Orthogonal Frequency Division Multiplexing demodulation on the signals after the analog/digital conversion.

The baseband decoding module 93 is configured to perform baseband decoding processing on the signals after the Orthogonal Frequency Division Multiplexing demodulation to obtain service signals.

Specifically, in the uplink of the passive optical network, if the optical line terminal receives a multi-wavelength optical signal sent by the optical network units, the WDM demultiplexer in the optical line terminal demultiplexes the signal into superposed Orthogonal Frequency Division Multiple Access signals of different wavelengths; the receivers in the optical line terminal respectively receive the superposed Orthogonal Frequency Division Multiple Access signals of different wavelengths; then the analog/digital conversion module 91 performs A/D conversion on the received superposed Orthogonal Frequency Division Multiple Access signals; the Orthogonal Frequency Division Multiplexing demodulation module 92 performs Orthogonal Frequency Division Multiplexing demodulation on the signals after analog/digital conversion, through FFT operation for example; and the baseband decoding module 93 performs baseband decoding, MQAM decoding for example, on the signals after Orthogonal Frequency Division Multiplexing demodulation to obtain service signals.

Further, the OLT may include a bandwidth allocation module 94 and a transmission module 95.

The bandwidth allocation module 94 is configured to allocate uplink Orthogonal Frequency Division Multiple Access subcarriers to an optical network unit according to the traffic volume and/or service type of the service signals.

The transmission module 95 is configured to send uplink bandwidth indication information which includes the quantity and serial numbers of the allocated Orthogonal Frequency Division Multiple Access subcarriers to the optical network unit.

After receiving a bandwidth allocation request from an optical network unit, the bandwidth allocation module 94 allocates Orthogonal Frequency Division Multiple Access subcarriers for the optical network unit according to the traffic volume and/or service type of the service signals; and the transmission module 95 sends uplink bandwidth indication information that includes the quantity and serial numbers of the allocated OFDMA subcarriers to the optical network unit.

In this embodiment, the optical line terminal demultiplexes a received multi-wavelength optical signal to superposed Orthogonal Frequency Division Multiple Access signals of different wavelengths and then performs analog/digital conversion, Orthogonal Frequency Division Multiplexing demodulation, and baseband decoding on the superposed Orthogonal Frequency Division Multiple Access signals to obtain service signals. Because the multi-wavelength signal is a continuous signal created by multiplexing Orthogonal Frequency Division Multiple Access signals, optical power compensation is easy to implement and therefore long-distance transmission is supported. The cost of the transmitters and receivers of continuous signals is lower than that of burst signals, thereby reducing the cost of network construction.

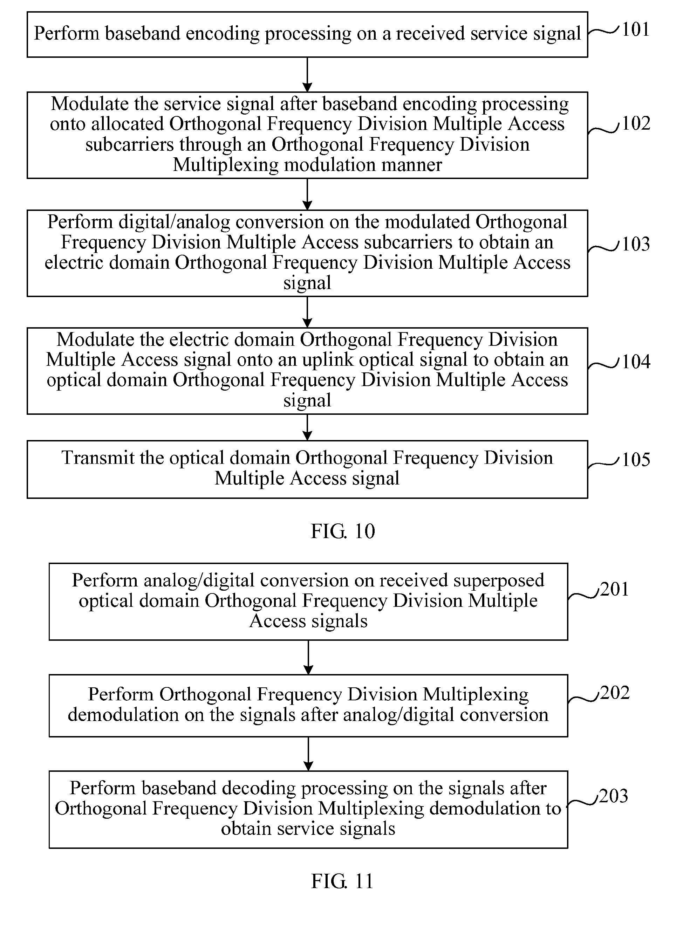

FIG. 10 is a flowchart of a first embodiment of a signal processing method in a passive optical network according to the present invention. As shown in FIG. 10, the signal processing method of the passive optical network includes the following steps.

Step 101: Perform baseband encoding processing on a received service signal.

Step 102: Modulate the service signal after baseband encoding processing onto allocated Orthogonal Frequency Division Multiple Access subcarriers through an Orthogonal Frequency Division Multiplexing modulation manner.

Step 103: Perform digital/analog conversion on the modulated Orthogonal Frequency Division Multiple Access subcarriers to obtain an electric domain Orthogonal Frequency Division Multiple Access signal.

Step 104: Modulate the electric domain Orthogonal Frequency Division Multiple Access signal onto an uplink optical signal to obtain an optical domain Orthogonal Frequency Division Multiple Access signal.

Step 105: Transmit the optical domain Orthogonal Frequency Division Multiple Access signal.

In this embodiment, the passive optical network system includes an optical line terminal OLT, a remote node RN, and more than one optical network unit ONU. The remote node includes a WDM demultiplexer, a WDM multiplexer, and a power splitter. The signal processing method of the passive optical network is applicable to both the uplink (from ONU to OLT) and the downlink (from OLT to ONU).

Further, the signal processing method of the passive optical network may include the following step:
receiving uplink bandwidth indication information, where the uplink bandwidth indication information includes quantity and serial numbers of the allocated Orthogonal Frequency Division Multiple Access subcarriers.

Specifically, in the uplink, the OLT may first allocate OFDMA subcarriers for the optical network unit according to the traffic volume and/or service type of the service signal and send the quantity and serial numbers of the allocated subcarriers to the ONU through the uplink bandwidth indication information. After receiving a service signal, such as an FE signal or a GE signal, the ONU performs baseband encoding processing, MQAM encoding for example, on the service signal. The ONU performs Orthogonal Frequency Division Multiplexing modulation on the service signal after baseband encoding processing, for example, the ONU modulates the service signal after baseband encoding processing onto the allocated Orthogonal Frequency Division Multiple Access subcarriers through IFFT operation. The ONU performs D/A conversion on the OFDMA subcarriers that carry the service signal to obtain an electric domain OFDMA signal and then modulates the electric domain OFDMA signal to an optical signal to obtain an optical domain OFDMA signal.

Further, step 104 may include:
generating an uplink optical signal according to a received downlink optical signal through reflection; and
modulating the electric domain OFDMA signal to the uplink optical signal to obtain an optical domain Orthogonal Frequency Division Multiple Access signal.

For example, An Reflective Semiconductor Optical Amplifier (RSOA) reflects a downlink optical signal received from the OLT to obtain an uplink optical signal and then modulates the electric domain OFDMA signal on the OFDMA subcarriers to the reflected uplink optical signal to create an optical domain OFDMA signal. The transmitter in the ONU may send the modulated optical domain OFDMA signal to the RN for multiplexing.

After step 105, the method may further include: superposing the optical domain Orthogonal Frequency Division Multiple Access signal through a power splitter of the remote node. The power splitter is configured to receive at least one optical signal that has the same wavelength as the optical domain Orthogonal Frequency Division Multiple Access signal, and transmitting the superposed optical domain Orthogonal Frequency Division Multiple Access signal.

Each power splitter in the RN may connect to multiple ONUs with the same transmitting wavelength and the multiple ONUs with the same transmitting wavelength may be placed in one group. After receiving the optical domain OFDMA signals of the same wavelength transmitted by one group of ONUs connected to a power splitter, the power splitter superposes the received optical domain OFDMA signals. Then, the WDM multiplexer in the RN multiplexes the optical domain OFDMA signals superposed by different power splitters, into a continuous multi-wavelength optical signal. The optical domain OFDMA signals superposed by different power splitters may have different wavelengths.

To increase the transmission distance, before transmitting the multi-wavelength optical signal, the RN may use an optical power compensator such as an active amplifier to compensate the optical power of the multi-wavelength optical signal, thereby implementing long-distance transmission.

In this embodiment, , the ONU modulates the received service signal to the allocated Orthogonal Frequency Division Multiple Access subcarriers and modulates the electrical signal on the Orthogonal Frequency Division Multiple Access subcarriers to a reflected uplink optical signal. After the RN superposes and multiplexes optical signals, a continuous multi-wavelength optical signal is obtained. As optical power compensation is easy and convenient for the continuous multi-wavelength optical signal, long-distance transmission can be supported. Because the cost of transmitters and receivers of continuous signals is lower than that of burst signals, the cost of network construction is reduced.

FIG. 11 is a flowchart of a second embodiment of a signal processing method in a passive optical network according to the present invention. As shown in FIG. 11, the signal processing method of the passive optical network includes the following steps.

Step 201: Perform analog/digital conversion on received superposed optical domain Orthogonal Frequency Division Multiple Access signals.

Step 202: Perform Orthogonal Frequency Division Multiplexing demodulation on the signals after analog/digital conversion.

Step 203: Perform baseband decoding processing on the signals after Orthogonal Frequency Division Multiplexing demodulation to obtain service signals.

The OLT may include multiple receivers. The WDM demultiplexer of the OLT demultiplexes a multi-wavelength optical signal received from the RN into superposed optical domain OFDMA signals of different wavelengths. The receivers may receive the superposed optical domain OFDMA signals respectively; the OLT performs analog/digital (A/D) conversion, Orthogonal Frequency Division Multiplexing (OFDM) demodulation such as FFT operation, and baseband decoding processing such as MQAM decoding operation on the superposed optical domain OFDMA signals to restore the service signals sent by the ONUs.

The OLT of this embodiment demultiplexes the received multi-wavelength optical signal into superposed optical domain OFDMA signals and performs analog/digital conversion, Orthogonal Frequency Division Multiplexing demodulation, and baseband decoding processing on the superposed optical domain OFDMA signals to obtain service signals. Because the multi-wavelength optical signal is a continuous signal created by multiplexing Orthogonal Frequency Division Multiple Access frames, optical power compensation is easy, and therefore long-distance transmission can be supported. Moreover, because the cost of the transmitters and receivers of continuous signals is lower than that of burst signals, the cost of network construction is reduced.

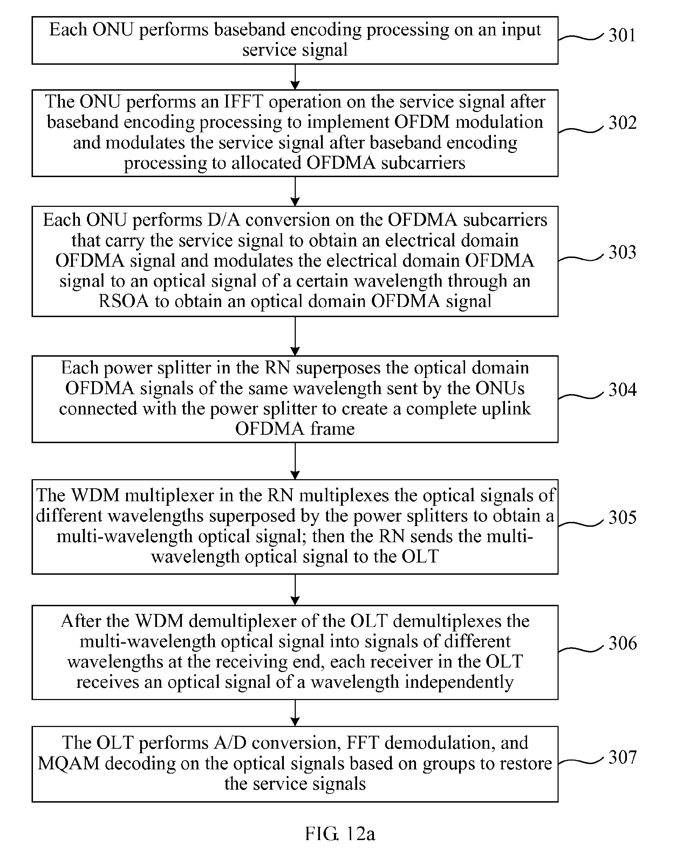

FIG. 12a is a flowchart of a third embodiment of a signal processing method in a passive optical network according to the present invention. As shown in FIG. 12a, on the basis of the first and the second embodiments of the present invention, the signal processing method of the passive optical network may include the following steps in the uplink from the ONU to the OLT:

Step 301: Each ONU performs baseband encoding processing, MQAM encoding for example, on an input service signal such as an FE signal or a GE signal.

Step 302: The ONU performs an IFFT operation on the service signal after baseband encoding processing to implement OFDM modulation and modulates the service signal after baseband encoding processing to allocated OFDMA subcarriers.

The OLT may allocate bandwidth to ONUs through the dynamic bandwidth allocation (Dynamic Bandwidth Allocation, DBA) algorithm based on the OFDMA subcarriers, so as to improve the uplink bandwidth efficiency. Specifically, an ONU monitors the traffic of an uplink service signal, and when the bandwidth is about to be exhausted, sends an uplink bandwidth allocation request to the OLT. The OLT allocates bandwidth to the ONUs uniformly according to the traffic volume or according to both the traffic volume and the service priority in accordance with the uplink bandwidth allocation requests of all ONUs. The uplink bandwidth allocation to all ONUs of one wavelength is in an OFDMA mode. Bandwidth is allocated to each ONU based on the OFDMA subcarriers. One or more OFDMA subcarriers may be allocated to one ONU. The ONUs share one uplink OFDMA frame based on the OFDMA subcarriers. Then, the OLT sends uplink bandwidth indication information to each ONU, indicating the quantity and the serial numbers of the uplink OFDMA subcarriers available for the ONU. When step 302 is executed, the ONU maps the service signal to the allocated subcarriers according to the received uplink bandwidth indication information. That is, the ONU performs MQAM mapping and IFFT operation on the allocated subcarriers and performs zero fill processing on the positions of other subcarriers. The OFDMA subcarriers are equivalent to timeslots. Each OFDMA subcarrier represents a minimum unit of bandwidth allocation. Multiple ONUs can share one wavelength through OFDMA subcarriers, thereby improving the sharing of wavelengths.

Step 303: Each ONU performs D/A conversion on the OFDMA subcarriers that carry the service signal to obtain an electric domain OFDMA signal and modulates the electric domain OFDMA signal to an optical signal of a certain wavelength through an RSOA to obtain an optical domain OFDMA signal.

Step 304: Each power splitter in the RN superposes the optical domain OFDMA signals of the same wavelength sent by the ONUs connected with the power splitter to form a complete uplink OFDMA frame.

The ONU may modulate the electric domain OFDMA signal by reflecting an uplink optical signal, for example, modulate the electric domain OFDMA signal to the optical signal of one wavelength through an RSOA. Specifically, the uplink optical signal of the ONU regards the downlink optical signal received by the ONU as a seed light source and is reflected and amplified, and then the amplified light source is modulated and sent to the OLT. In the uplink, the ONUs of the same transmitting wavelength that are connected to each power splitter are regarded as one group. For example, 32 ONUs of wavelength A are the first group; 32 ONUs of wavelength B are the second group. Assuming that 32 wavelengths exist, the ONUs may be divided into 32 groups.

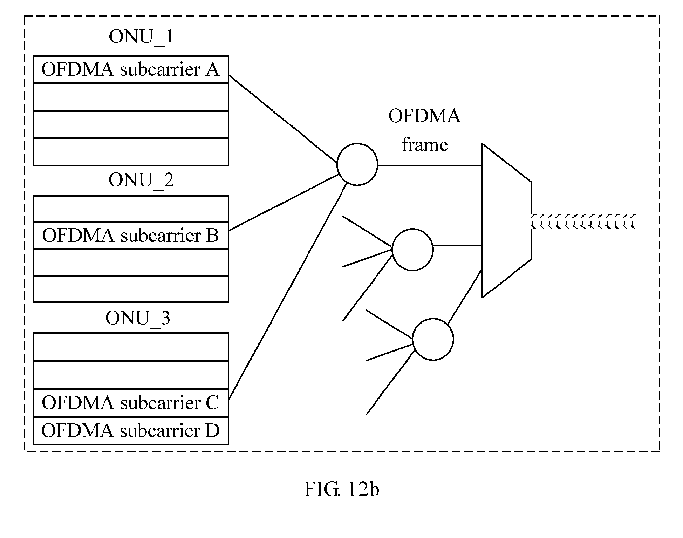

The ONUs in one group share the wavelength through the OFDMA subcarriers allocated by the OLT. Specifically, different quantities of OFDMA subcarriers with different serial numbers are allocated to different ONUs in one group and the electric domain OFDMA signals on OFDMA subcarriers of the group are modulated to optical domain OFDMA signals of one wavelength. The optical domain OFDMA signals of one wavelength are then superposed by a power splitter. One or more than one OFDMA subcarrier is allocated to one ONU in the uplink. A power splitter superposes, on one wavelength, the OFDMA subcarriers of all ONUs connected with the power splitter in the frequency domain and the time domain into one OFDMA frame. FIG. 12b is a schematic diagram of OFDMA subcarriers superposed on one the same wavelength in the third embodiment of the signal processing method of the passive optical network according to the present invention. As shown in FIG. 12b, OFDMA subcarrier A is allocated to ONU_1, OFDMA subcarrier B is allocated to ONU_2, and OFDMA subcarriers C and D are allocated to ONU_3. Then, on the same wavelength, the OFDMA subcarriers A, B, C, and D allocated to all ONUs are superposed into one OFDMA frame.

The reason for grouping ONUs by wavelength is as follows. Assuming that 1,024 ONUs exist, if only one subcarrier is allocated to one ONU, the fine granularity of bandwidth allocation is poor, which impedes the efficient use of bandwidth. For efficient use of bandwidth, more than one subcarrier may be allocated to one ONU. Assuming that the OLT allocates 32 subcarriers to each ONU, when an ONU performs an IFFT operation, the operation must be carried out at 32*1024 points. The more operation points, the harder the digital processing and hardware implementation of the IFFT operation. If the ONUs are grouped by wavelength, OFDMA processing, IFFT operation, OLT reception, and bandwidth allocation management can be performed based on each group, thereby reducing the points of an IFFT operation and making the hardware implementation easier. For example, if 32 subcarriers are allocated to each ONU and the quantity of wavelengths is 32, 1,024 ONUs can be divided into 32 groups and the IFFT operation of only 32*32=1024 subcarriers is required, much fewer than the points required when the ONUs are not grouped. The benefit of an independent operation on individual wavelengths is the convenience of expansion. The expansion of one group does not adversely impact the normal operation of other groups. For example, when the maximum quantity of wavelengths is 32 and one wavelength can be used by at most 64 ONUs, the maximum quantity of ONUs connected in the network is 32*64=2048.

Further, OFDMA frames are repeated by time and the distance of each ONU is different. OFDMA frames are likely to have time deviation when the power splitters superpose signals. If the time deviation exceeds the guard interval between OFDMA frames, an error may occur when the OLT receives the signals. Therefore, the OLT can measure the distance or relative time deviation between ONUs in one group divided by wavelength. This is a distance measurement process. Each ONU sends delay compensation according to the result of distance measurement to make the differential distance delay smaller than the guard interval between OFDMA frames, so that the OLT can receive the signals correctly. The distance measurement process is as follows: First, the OLT sends a windowing command; then ONUs in operation stop transmitting data and performs zero fill on the positions of the allocated subcarriers in the OFDMA frame, and newly joined ONUs use the value of a downlink time counter as the downlink time reference and send an OFDMA Join Request frame to the OLT; if the OLT receives the OFDMA Join Request frame sent by the newly joined ONU, the OLT calculates the time deviation of the new ONU and sends the time deviation back to the ONU; then the new ONU adds the time deviation to the downlink time reference and sends the OFDMA frame to the OLT; and after receiving and acknowledging the OFDMA frame, the OLT sends an acknowledgement information to the ONU, indicating that the ONU is successfully joined.

Step 305: The WDM multiplexer in the RN multiplexes the optical signals of different wavelengths superposed by the power splitters to obtain a multi-wavelength optical signal; then the RN sends the multi-wavelength optical signal to the OLT.

The optical signals of different wavelengths superposed by the power splitters and carrying the OFDMA frames are independent of each other. The uplink OFDMA frames of different wavelengths superposed by the power splitters are multiplexed by the WDM multiplexer in the RN to form a multi-wavelength optical signal which is sent to the OLT.

Step 306: After the OLT demultiplexes the multi-wavelength optical signal into signals of different wavelengths at the receiving end through the WDM demultiplexer, each receiver in the OLT receives an optical signal of a wavelength independently.

At the receiving end, the WDM demultiplexer of the OLT may screen out optical signals of different wavelengths and send the optical signals to different receivers, optical receivers for example. Because the uplink OFDMA signal of each ONU is continuous in time, the OLT may use continuous optical receivers to receive the signals. Furthermore, each ONU may use continuous laser transmitters in the uplink without the need of any shutoff processing.

In addition, one group of ONUs has one seed light source, and the uplink wavelength of one group of ONUs is locked at the same seed light source, so that the uplink wavelength of the group of ONUs keeps strictly the same. In this case, after a power splitter superposes the optical domain OFDMA signals of all ONUs in the group into an uplink OFDMA frame which is sent to the OLT, the receivers of the OLT does not generate beat noise. A specific analysis is as follows:

In the uplink, the wavelengths outputted by modulators of one group of ONUs are strictly the same or greatly different and cannot be close. Otherwise, the receivers of the OLT generate beat noise which adversely impacts the correct reception. To avoid the beat noise, a solution is to keep the wavelengths of uplink optical signals of one group of ONUs strictly the same. For example, the RSOA in an ONU reflects and amplifies received downlink color light which is the same as the uplink light. The downlink color light may be a currently modulated downlink optical signal which is received by the ONU and carries the data transmitted by the OLT or another downlink optical signal specially sent by the OLT to the ONU. In the embodiment of the present invention, the downlink color light is preferably a currently modulated downlink optical signal which is received by the ONU and carries the data transmitted by the OLT. After receiving the downlink optical signal, the RSOA in the ONU reflects and amplifies the optical signal to create an uplink optical signal; then the ONU modulates the uplink IFFT-processed electric domain OFDMA signal to the uplink optical signal to convert the electrical signal into an optical signal. This is a re-modulation process in which the downlink optical signal is reflected and amplified and then electrical-optical modulation is performed. The uplink laser of the ONU may be the RSOA or an FP-LD (Fabry-Perot semiconductor laser diode), or other types of laser diode. The uplink optical signal of the ONU is not limited to one that is the same as the received downlink optical signal, but the uplink optical signals of ONUs in one group must be the same to ensure that the receivers in the OLT corresponding to the group of ONUs will not generate beat noise.

Step 307: The OLT performs A/D conversion, FFT demodulation, and MQAM decoding on the optical signals based on groups to restore the service signals.

If the device capability allows, when the PON signal processing method according to the embodiment of the present invention is used, the access bandwidth of each ONU is large, even up to 1 Gbps. The specific analysis is as follows:

It is assumed that the sampling rate of the A/D converter is 5 Gbps (bit per second, bps) and that the uplink modulation bandwidth is 2.5 GHz. If 1,024 OFDMA subcarriers exist, the interval between every two OFDMA subcarriers is about 2.44 MHz. If 16QAM encoding is adopted and the spectrum efficiency is 4 bps/Hz, the data rate of each OFDMA subcarrier is 2.44 MHz*4 bps/Hz=9.76 Mbps, which means that the access bandwidth of each OFDMA subcarrier may reach 9.76 Mbps. If one ONU has averagely 32 subcarriers, the access bandwidth of one ONU may exceed 300 Mbps in theory. Considering the overhead for error correction and the like, if the spectrum efficiency of 16QAM encoding is 2 bit/Hz, the average access bandwidth of one ONU may still exceed 150 Mbps, which is up to the access bandwidth required by an LTE base station. Further, assuming that 1,024 ONUs exist and every 32 ONUs share one wavelength, the uplink rate of each wavelength is 32*1 Gbps=32 Gbps. If the sampling rate of the A/D converter in use is 20 Gbps and 64QAM encoding is adopted, when the spectrum efficiency is 4 bps/Hz, the data rate at 10 GHz bandwidth may reach 10 GHz*4 bps/Hz=40 Gbps. Therefore, if the device capability allows, the average uplink bandwidth of one ONU may reach 1 Gbps.

In this embodiment, the ONUs in the network may be expanded according to wavelengths. For example, if one wavelength may be used by at most 32 ONUs, 32 wavelengths may serve 1,024 ONUs. If one wavelength may be used by at most 64 ONUs and at most 40 wavelengths exist at the C band, the wavelengths may serve 2,560 ONUs. In the embodiment of the present invention, the ONU performs OFDM modulation and MQAM encoding before the optical modulation, which may increase the bandwidth efficiency. The ONUs share the uplink optical signal through OFDMA. The OFDMA frames of the ONUs are repeated and superposed based on time. An OFDMA frame includes a prefix and an OFDM IFFT data part. The superposed OFDMA signal is continuous in time. In a TDMA PON, service signals are converted to TDM frames and then directly modulated to the laser transmitter and the signal obtained after the superposition processing of the power splitter is the same burst signal as the uplink signal of the GPON. Therefore, the ONU of this embodiment does not need to have the capability of uplink burst transmission, but only needs the common capability of continuous transmission. The laser transmitters of the ONU do not need to be turned off and turned on, but can remain on. Therefore, it is unnecessary to dispose expensive burst receivers in the OLT. Common continuous receivers like optical receivers will meet the need. Therefore, the cost of network construction is reduced. Although electrical processes like IFFT and D/A conversion are added in the embodiment of the present invention, these processes may be implemented on the basis of mature integrated circuits and the hardware cost is not high.

In addition, in the current PON with the mixture of WDM and TDM, the transmission distance is restricted by the physical distance of the GPON. Apart from the optical power budget, factors affecting the physical distance include the difficulty to compensate the optical power of burst signals for in the all-optical domain, the time constant of an EDFA is far greater than the frame duration of the GPON. Therefore, it is impossible to respond to burst signals of different levels completely. As a result, power compensation in the optical domain is extremely difficult. In the embodiment of the present invention, the signals transmitted by the ONU and received by the OLT are continuous OFDMA signals. An EDFA may be used to compensate the optical power of the continuous OFDMA signals at the OLT and the RN. For example, a bi-directional optical amplifier is disposed in the RN, which may greatly increase the transmission distance to implement long-distance transmission.

In the uplink, for example, the RN and the OLT have no optical amplifier for compensation. It is assumed that the output power of the ONU is 0 DBm, and that 4 dB is consumed after a signal is transmitted for 10 km and reaches the RN. If the power splitter consumes 15 DB and the WDM multiplexer consumes 5 DB, the total loss is then 4 + 15 + 5 = 24 DB. Assuming that the receiver sensitivity of the OLT is -28 DB, if the RN does not compensate the optical power of the uplink signal, the budget for the transmission between the OLT and the RN is 4 dB (28-24=4), which allows only 10 km transmission. Therefore, the total transmission distance is 20 km. If an optical power compensator like an EDFA is disposed in the RN, the power consumed by the power splitter and the WDM multiplexer can be totally compensated (altogether 15 + 5 = 20 DB). If optical power of the uplink signal of the RN is 10 dB, the uplink power budget is about 38 DB( the receiver sensitivity of the OLT 28 DB + the uplink signal power of the RN 10 DB = 38DB). If each 10 km transmission consumes 4 dB, the budget may support the transmission of at least 80 km between the OLT and the RN. If the OLT also provides optical power compensation, for example, a (PRE-AMP) EDFA is disposed in the OLT to increase the receiver sensitivity of the OLT to -40 dB, the transmission distance allowed between the RN and the OLT may exceed 100 km. Plus the optical power compensation of the RN, all-optical transmission of above 110 km may be implemented between the ONU and the OLT.

In the downlink, for example, the output power of the downlink optical amplifier of the OLT is +20 dB and after the signal reaches the RN 80 km away, -12 dB is left. After the downlink amplifier in the RN compensates the power, the power may be increased to +12 dB. Then 5 dB is consumed by the AWG and 7 dB is left. Then the power splitter consumes 15 dB and -8 dB is left. When the signal reaches the ONU after 10 km transmission, 4 dB is consumed and -12 dB is left. If the receiver sensitivity of the ONU is -18 dB, the total power budget has a big margin. The above power compensation of the RN is only a conservative consideration. If the maximum output power is considered, there is a greater power margin. Therefore, the power compensation for a continuous signal in the embodiment of the present invention enables long-distance transmission of above 100 km.

In addition, in the embodiment of the present invention, the allocation of bandwidth to ONUs by OFDMA subcarrier is based on the frequency domain. In the current PON with the mixture of WDM and TDM, bandwidth is allocated for the ONUs dynamically in a TDMA mode, which is based on the time domain.

To sum up, in the embodiments of the present invention, the OFDMA frames transmitted in the uplink are continuous signals, without the need of an uplink burst transmitter of the ONU and an uplink burst receiver of the OLT, which may reduce the cost of network construction. It is easy to implement optical power compensation for a continuous signal, and therefore long-distance transmission is implemented, for example, above 100 km transmission can be implemented, which offers possibility of CO upper shift. For example, the service radius of a CO can be increased to 100 KM, thereby reducing the number of COs and lower the cost of operation and maintenance. In the uplink, ONUs are grouped according to different wavelengths, which facilitates the increase of the number of the ONUs in the system. The RSOA is used to reflect optical signals of the same wavelength, so that the uplink optical signals of all ONUs in one group have the same wavelength, thereby avoiding the generation of beat noise when the signals are received by the OLT in the uplink.

Those skilled in the art may understand that all or part of the steps in the method according to the embodiments of the present invention can be implemented by hardware under the instruction of a program. The program may be stored in a computer readable storage medium and when the program runs, the steps in the method according to the embodiments of the present invention are executed. The storage medium is any medium that can store program codes, such as a ROM, a RAM, a magnetic disk, or an optical disk.

It should be noted that the foregoing embodiments are merely provided for describing the technical solution of the present invention, but not intended to limit the present invention. Although the present invention is described in detail with reference to the embodiments, those skilled in the art should understand that various modifications and variations may be made to the technical solution of the present invention or some technical features thereof, without departing from the spirit and scope of the present invention.

## Claims

1. A signal processing method in a passive optical network, comprising:
performing baseband encoding processing on a received service signal;
modulating the service signal after baseband encoding processing onto allocated Orthogonal Frequency Division Multiple Access subcarriers through an Orthogonal Frequency Division Multiplexing modulation manner;
performing digital/analog conversion on the modulated Orthogonal Frequency Division Multiple Access subcarriers to obtain an electric domain Orthogonal Frequency Division Multiple Access signal;
modulating the electric domain Orthogonal Frequency Division Multiple Access signal to an uplink optical signal to obtain an optical domain Orthogonal Frequency Division Multiple Access signal; and
transmitting the optical domain Orthogonal Frequency Division Multiple Access signal.

2. The signal processing method in a passive optical network according to claim 1, wherein the modulating the electric domain Orthogonal Frequency Division Multiple Access signal to an uplink optical signal to obtain an optical domain Orthogonal Frequency Division Multiple Access signal comprises:
generating an uplink optical signal according to a received downlink optical signal through reflection; and
modulating the electric domain Orthogonal Frequency Division Multiple Access signal to the uplink optical signal to obtain the optical domain Orthogonal Frequency Division Multiple Access signal.

3. The signal processing method in a passive optical network according to claim 1 or 2, further comprising:
superposing the optical domain Orthogonal Frequency Division Multiple Access signal through a power splitter of a remote node, wherein the power splitter is configured to receive at least one optical signal with the same wavelength as the optical domain Orthogonal Frequency Division Multiple Access signal, and transmitting the superposed optical domain Orthogonal Frequency Division Multiple Access signal.

4. The signal processing method in a passive optical network according to claim 1 or 2, further comprising:
receiving uplink bandwidth indication information, wherein the uplink bandwidth indication information comprises quantity and serial numbers of the allocated Orthogonal Frequency Division Multiple Access subcarriers.

5. A signal processing method in a passive optical network, comprising:
performing analog/digital conversion on received superposed optical domain Orthogonal Frequency Division Multiple Access signals;
performing Orthogonal Frequency Division Multiplexing demodulation on the signals after analog/digital conversion; and
performing baseband decoding processing on the signals after Orthogonal Frequency Division Multiplexing demodulation to obtain service signals.

6. The signal processing method in a passive optical network according to claim 5, further comprising:
allocating uplink Orthogonal Frequency Division Multiple Access subcarriers to an optical network unit according to a traffic volume and/or service type of the service signals; and
sending uplink bandwidth indication information to the optical network unit, wherein the uplink bandwidth indication information comprises the quantity and serial numbers of the Orthogonal Frequency Division Multiple Access subcarriers.

7. An optical network unit, comprising:
an encoding module, configured to perform baseband encoding processing on a received service signal;
an Orthogonal Frequency Division Multiplexing modulation module, configured to modulate the signal after baseband encoding processing onto allocated Orthogonal Frequency Division Multiple Access subcarriers through an Orthogonal Frequency Division Multiplexing modulation manner;
a digital/analog conversion module, configured to perform digital/analog conversion on the modulated Orthogonal Frequency Division Multiple Access subcarriers to obtain an electric domain Orthogonal Frequency Division Multiple Access signal;
an optical modulation module, configured to modulate the electric domain Orthogonal Frequency Division Multiple Access signal to an uplink optical signal to obtain an optical domain Orthogonal Frequency Division Multiple Access signal; and
a transmission module, configured to transmit the optical domain Orthogonal Frequency Division Multiple Access signal.

8. The optical network unit according to claim 7, wherein the optical modulation module is specifically configured to generate an uplink optical signal according to a received downlink optical signal through reflection and modulate the electrical Orthogonal Frequency Division Multiple Access signal to the uplink optical signal to obtain the optical domain Orthogonal Frequency Division Multiple Access signal.

9. The optical network unit according to claim 7 or 8, further comprising:
a receiving module, configured to receive uplink bandwidth indication information, wherein the uplink bandwidth indication information comprises quantity and serial numbers of the allocated Orthogonal Frequency Division Multiple Access subcarriers.

10. An optical line terminal, comprising:
an analog/digital conversion module, configured to perform analog/digital conversion on received superposed Orthogonal Frequency Division Multiple Access signals;
an Orthogonal Frequency Division Multiplexing demodulation module, configured to perform Orthogonal Frequency Division Multiplexing demodulation on the signals after analog/digital conversion; and
a baseband decoding module, configured to perform baseband decoding processing on the signals after Orthogonal Frequency Division Multiplexing demodulation to obtain service signals.

11. The optical line terminal according to claim 10, further comprising:
a bandwidth allocation module, configured to allocate uplink Orthogonal Frequency Division Multiple Access subcarriers to an optical network unit according to a traffic volume and/or service type of the service signals; and
a transmission module, configured to transmit uplink bandwidth indication information to the optical network unit, wherein the uplink bandwidth indication information comprises quantity and serial numbers of the allocated Orthogonal Frequency Division Multiple Access subcarriers.

12. A passive optical network system, comprising an optical line terminal, a remote node, and more than one optical network unit (ONU), wherein:
the ONU is configured to perform baseband encoding processing on a received service signal; modulate the signal after baseband encoding processing onto allocated Orthogonal Frequency Division Multiple Access subcarriers through Orthogonal Frequency Division Multiplexing modulation; perform digital/analog conversion on the modulated Orthogonal Frequency Division Multiple Access subcarriers to obtain an electric domain Orthogonal Frequency Division Multiple Access signal; modulate the electric domain Orthogonal Frequency Division Multiple Access signal onto an uplink optical signal to obtain an optical domain Orthogonal Frequency Division Multiple Access signal; and transmit the optical domain Orthogonal Frequency Division Multiple Access signal;
the remote node is configured to superpose optical domain Orthogonal Frequency Division Multiple Access signals of the same wavelength transmitted from different optical network units through a power splitter, multiplex the superposed optical domain Orthogonal Frequency Division Multiple Access signals into a multi-wavelength optical signal through a Wave Division Multiplexing multiplexer, and transmit the multi-wavelength optical signal to the optical line terminal; and
the optical line terminal is configured to demultiplex the received multi-wavelength optical signal to obtain optical signals of different wavelengths, wherein the optical signals of different wavelengths bear the superposed optical domain Orthogonal Frequency Division Multiple Access signals, and perform analog/digital conversion, Orthogonal Frequency Division Multiplexing demodulation, and baseband decoding processing on the superposed optical domain Orthogonal Frequency Division Multiple Access signals respectively to obtain service signals.

13. The passive optical network system according to claim 12, wherein:
the optical line terminal is further configured to perform baseband encoding processing and Orthogonal Frequency Division Multiplexing modulation on a received service signal to modulate the service signal to allocated Orthogonal Frequency Division Multiple Access subcarriers; perform digital/analog conversion on the modulated Orthogonal Frequency Division Multiple Access subcarriers to obtain an electric domain Orthogonal Frequency Division Multiple Access signal; modulate the electric domain Orthogonal Frequency Division Multiple Access signal to a downlink optical signal to obtain an optical domain Orthogonal Frequency Division Multiple Access signal; and multiplex optical domain Orthogonal Frequency Division Multiple Access signals of different wavelengths into a multi-wavelength optical signal and transmit the multi-wavelength optical signal to the remote node;
the remote node is further configured to demultiplex the received multi-wavelength optical signal through a Wave Division Multiplexing multiplexer into optical signals of different wavelengths which bear optical domain Orthogonal Frequency Division Multiple Access signals, and transmit the Orthogonal Frequency Division Multiple Access signals to different optical network units through a power splitter; and
the optical network unit is further configured to: receive the optical domain Orthogonal Frequency Division Multiple Access signals transmitted by the remote node and perform analog/digital conversion, Orthogonal Frequency Division Multiplexing demodulation, and baseband decoding on the optical domain Orthogonal Frequency Division Multiple Access signals respectively to obtain service signals.
